# EUROPEAN PATENT APPLICATION

(11) **EP 4 342 928 A1**
(43) Date of publication of application: **27.03.2024**
(21) Application number: 22804764.3
(22) Date of filing: 20.05.2022
(51) Int. Cl.: C08G 64/30, C08G 64/00, C08G 64/26

(54) **METHOD FOR PRODUCING POLYCARBONATE**

(30) Priority: 20.05.2021 JP 2021085297; 28.10.2021 JP 2021176302
(71) Applicant: AGC INC., Chiyoda-ku, Tokyo 1008405 (JP); Nagoya Institute Of Technology, Nagoya-shi, Aichi 466-0061 (JP)
(72) Inventor: OKAZOE Takashi, Tokyo 100-8405 (JP); SUZUKI Masahito, Nagoya-shi, Aichi 466-0061 (JP)
(74) Representative: TBK
(86) International application number: PCT/JP2022/020920
(87) International publication number: WO 2022/244856

(57) **Abstract**

A method for producing a polycarbonate including reacting a dihydroxy component which is at least one non-aromatic dihydroxy compound selected from an alicyclic dihydroxy compound (provided that an ethereal oxygen atom may be contained) or the like, or a mixture of the non-aromatic dihydroxy compound and an aromatic dihydroxy compound, with a specific fluorine-containing carbonate component selected from a compound represented by the following Formula (1) or the like in the presence of a condensation catalyst, and subjecting the obtained prepolymer to a solid state polymerization.

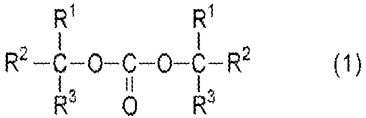

## Description

### [Technical Field]

The present invention relates to a method for producing a polycarbonate.

Priority is claimed on Japanese Patent Application No. 2021-85297 filed May 20, 2021 and Japanese Patent Application No. 2021-176302 filed October 28, 2021, the contents of which are incorporated herein by reference.

### [Background Art]

A polycarbonate is widely used in many fields as an engineering plastics having excellent heat resistance, impact resistance, transparency, and the like.

A polycarbonate is generally produced using a raw material derived from petroleum resources. However, in recent years, there have been concerns about the depletion of petroleum resources, and there is a demand to use raw materials derived from biomass resources such as plants.

As a polycarbonate using raw materials derived from biomass resources, a polycarbonate using plant-derived isosorbide is known.

As a method for producing a polycarbonate using isosorbide, a method of performing melt polycondensation (transesterification method) of diphenyl carbonate and isosorbide, and as necessary, another dihydroxy compound is known (Patent Document 1).

On the other hand, as a method for producing an aromatic polycarbonate, a method of reacting a specific fluorine-containing carbonate with an aromatic dihydroxy compound and subjecting the obtained prepolymer to a solid state polymerization has been proposed (Patent Document 2).

### [Citation List]

### [Patent Documents]

[Patent Document 1]
   PCT International Publication No. WO2012/144573
[Patent Document 2]
   PCT International Publication No. WO2014/171367

### [Summary of Invention]

### [Technical Problem]

However, the method of performing a melt polycondensation of diphenyl carbonate with isosorbide and the like has the following problems.
· A high temperature is required to promote the transesterification reaction. For example, even when a catalyst is used, polycondensation is performed at a reaction temperature of 240°C or more.
· Even when the reaction is performed at a high temperature, the molecular weight is not increased, and a product having a high molecular weight cannot be obtained.
· Polycarbonate is decomposed and colored because of a high temperature during the polycondensation.

There is a same problem as described above also when an alicyclic dihydroxy compound or a linear or branched aliphatic dihydroxy compound is used instead of isosorbide.

In Patent Document 2, the use of a dihydroxy compound other than an aromatic dihydroxy compound as the dihydroxy compound is not examined.

The present invention provides a method for producing a polycarbonate having a high molecular weight from a non-aromatic dihydroxy compound as a raw material at a relatively low temperature.

### [Solution to Problem]

The present invention has the following aspects.
[1] A method for producing a polycarbonate comprising:
   reacting a dihydroxy component shown below with a fluorine-containing carbonate component shown below in a presence of a condensation catalyst to obtain a prepolymer; and
   heating the prepolymer at a temperature lower than a melting temperature of the prepolymer and subjecting the prepolymer to a solid state polymerization while discharging a by-produced fluorine-containing alcohol outside a system,
   wherein the dihydroxy component is at least one non-aromatic dihydroxy compound selected from the group consisting of an alicyclic dihydroxy compound and a linear or branched aliphatic dihydroxy compound, or a mixture of the non-aromatic dihydroxy compound and an aromatic dihydroxy compound, where a part of carbon atoms in the alicyclic dihydroxy compound may be substituted with an oxygen atom, and a part of carbon atoms in the linear or branched aliphatic dihydroxy compound may be substituted with an oxygen atom,
   the fluorine-containing carbonate component is at least one compound selected from the group consisting of a compound represented by Formula (1) shown below, a compound represented by Formula (2) shown below, a compound represented by Formula (3) shown below, and a compound represented by Formula (4) shown below.

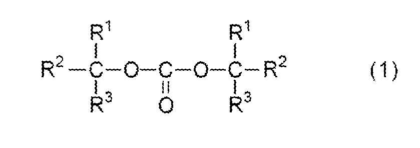

Provided that R¹ represents a group represented by CA¹B¹R⁴ and two R¹'s may be the same as or different from each other,
R² represents a group represented by CA²B²R⁵ and two R²'s may be the same as or different from each other,
R³ represents a hydrogen atom or a group represented by CA³B³R⁶ and two R³'s may be the same as or different from each other,
A' to A³ each independently represent a hydrogen atom, a fluorine atom, or R^{f},
B¹ to B³ each independently represent a hydrogen atom, a fluorine atom, or R^{f},
R⁴ to R⁶ each independently represent a fluorine atom, R^{f}, or OR^{f}, and
R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom.

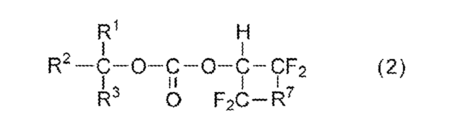

Provided that R¹ represents a group represented by CA¹B¹R⁴,
R² represents a group represented by CA²B²R⁵,
R³ represents a hydrogen atom or a group represented by CA³B³R⁶,
R⁷ represents a perfluoroalkylene group having 1 to 5 carbon atoms, where a part of carbon atoms in the perfluoroalkylene group having 1 to 5 carbon atoms may be substituted with an oxygen atom,
A¹ to A³ each independently represent a hydrogen atom, a fluorine atom, or R^{f},
B¹ to B³ each independently represent a hydrogen atom, a fluorine atom, or R^{f},
R⁴ to R⁶ each independently represent a fluorine atom, R^{f}, or OR^{f}, and
R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom.

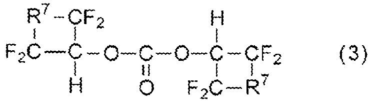

Provided that R⁷ represents a perfluoroalkylene group having 1 to 5 carbon atoms, and two R⁷'s may be the same as or different from each other, where a part of carbon atoms in the perfluoroalkylene group having 1 to 5 carbon atoms may be substituted with an oxygen atom.

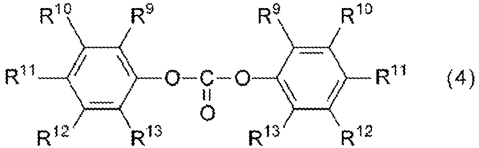

Provided that R⁹ to R¹³ each independently represent a hydrogen atom, a fluorine atom, or a fluoroalkyl group having 1 to 6 carbon atoms, two R⁹'s, two R¹⁰'s, two R¹¹'s, two R¹²'s, and two R¹³'s may be the same as or different from each other, and at least one fluorine atom is contained in a molecule thereof, where a part of carbon atoms in the fluoroalkyl group having 1 to 6 carbon atoms may be substituted with an oxygen atom.
[2] The production method according to [1], in which the non-aromatic dihydroxy compound includes isosorbide.
[3] The production method according to [2], in which a proportion of the isosorbide to an entire non-aromatic dihydroxy compound is 50% by mole or more.
[4] The production method according to any one of [1] to [3], in which the dihydroxy component is a mixture of the non-aromatic dihydroxy compound and the aromatic dihydroxy compound.
[5] The production method according to any one of [1] to [4], in which a weight-average molecular weight of the prepolymer is 500 to 15,000.
[6] The production method according to any one of [1] to [5], in which a heating temperature when the prepolymer is subjected to the solid state polymerization is 200°C or less.
[7] The production method according to any one of [1] to [6], in which a weight-average molecular weight of the polycarbonate is 10,000 to 100,000.
[8] The production method according to any one of [1] to [7], in which the number of carbon atoms in the alicyclic dihydroxy compound is preferably 2 to 20, more preferably 3 to 16, even more preferably 4 to 13, and particularly preferably 5 to 10.
[9] The production method according to any one of [1] to [8], in which the number of carbon atoms in the linear or branched aliphatic dihydroxy compound is preferably 2 to 20, more preferably 3 to 16, even more preferably 4 to 13, and particularly preferably 5 to 10.
[10] The production method according to any one of [1] to [9], in which the number of carbon atoms in the aromatic dihydroxy compound is preferably 4 to 20, more preferably 6 to 19, even more preferably 8 to 18, and particularly preferably 10 to 17.
[11] The production method according to any one of [1] to [10], in which the non-aromatic dihydroxy compound includes isosorbide, and a proportion of the isosorbide to the entire dihydroxy component is preferably 40% to 95% by mole and more preferably 50% to 90% by mole.
[12] The production method according to any one of [1] to [11], in which the dihydroxy component is isosorbide, or a mixture of isosorbide and 1,4-cyclohexanedimethanol or bisphenol A.
[13] The production method according to any one of [1] to [12], in which the fluorine-containing carbonate component is preferably at least one selected from the group consisting of bis(1,1,1,3,3,3-hexafluoroisopropyl)carbonate, bis(perfluoro(t-butyl))carbonate, and bis(2,2,3,3,4,4,5,5,6,6-decafluorocyclohexyl)carbonate, and more preferably bis(1,1,1,3,3,3-hexafluoroisopropyl)carbonate.
[14] The production method according to any one of [1] to [13], in which the condensation catalyst is preferably a tertiary amine, more preferably at least one selected from the group consisting of triethylamine, tripropylamine, tributylamine, triisoamylamine, trihexylamine, triheptylamine, trioctylamine, and tridodecylamine, and even more preferably at least one selected from the group consisting of triethylamine and tributylamine.
[15] The production method according to any one of [1] to [14], in which the reaction of obtaining the prepolymer is carried out in a solvent, and the solvent is preferably at least one selected from the group consisting of acetonitrile, N,N-dimethylformamide (DMF), 1,4-dioxane, dichloromethane, chloroform, and chlorobenzene, more preferably acetonitrile, DMF, and chlorobenzene, and even more preferable acetonitrile.
[16] The production method according to any one of [1] to [15], in which a weight-average molecular weight of the prepolymer is preferably 500 to 15,000, more preferably 500 to 10,000, and particularly preferably 1,000 to 10,000.
[17] The production method according to any one of [1] to [16], in which a weight-average molecular weight of the polycarbonate is preferably 10,000 to 100,000, more preferably 15,000 to 70,000, and particularly preferably 20,000 to 60,000.
[18] The production method according to any one of [1] to [17], including, after reacting the dihydroxy component with the fluorine-containing carbonate component in the presence of the condensation catalyst, distilling off a solvent and a by-produced fluorine-containing alcohol to isolate a solid prepolymer.
[19] The production method according to any one of [1] to [18], in which a heating temperature when the prepolymer is subjected to the solid phase polymerization is preferably 200°C or less, more preferably 40°C or more and 200°C or less, and even more preferably 90°C or more and 195°C or less.
[20] The production method according to any one of [1] to [19], in which, when the prepolymer is subjected to the solid state polymerization, heating is started at a temperature around 40°C to 110°C, and the temperature is gradually raised and finally heated to a temperature of 180°C to 200°C.
[21] The production method according to any one of [1] to [20], in which a heating time when the prepolymer is subjected to the solid state polymerization is preferably 1 to 48 hours, more preferably 2 to 36 hours, and particularly preferably 3 to 24 hours.
[22] The production method according to any one of [1] to [21], in which a pressure when the prepolymer is subjected to the solid state polymerization is preferably 13 kPa (absolute pressure) (100 torr (absolute pressure)) or less, more preferably 1.3 kPa (absolute pressure) (10 torr (absolute pressure)) or less, and particularly preferably 0.67 kPa to 0.013 kPa (absolute pressure) (5 to 0.1 torr (absolute pressure)).
[23] A use of the polycarbonate obtained by the production method according to any one of [1] to [22] in producing of an optical member (a lens, an optical fiber, a film, a backlight diffusion plate for an LCD, a photosensitive body, and the like), a DVD/CD disk, an electronic component housing (such as a mobile phone), a window of transportation equipment, a transparent roofing material, a windshield, a screen, a bulletproof window, tableware, a suitcase, or a helmet.
[24] A fluorine-containing biscarbonate represented by Formula (m1) shown below. 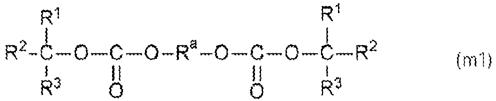
   Provided that R¹ represents a group represented by CA¹B¹R⁴ and two R¹'s may be the same as or different from each other,
   R² represents a group represented by CA²B²R⁵ and two R²'s may be the same as or different from each other,
   R³ represents a hydrogen atom or a group represented by CA³B³R⁶ and two R³'s may be the same as or different from each other,
   A¹ to A³ each independently represent a hydrogen atom, a fluorine atom, or R^{f},
   B¹ to B³ each independently represent a hydrogen atom, a fluorine atom, or R^{f},
   R⁴ to R⁶ each independently represent a fluorine atom, R^{f}, or OR^{f},
   R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom, and
   R^{a} represents a residue where two hydroxyl groups are excluded from an alicyclic dihydroxy compound or a linear or branched aliphatic dihydroxy compound, where a part of carbon atoms in the alicyclic dihydroxy compound may be substituted with an oxygen atom, and a part of carbon atoms in the linear or branched aliphatic dihydroxy compound may be substituted with an oxygen atom.
[25] A method for producing the fluorine-containing biscarbonate according to [24], including reacting a dihydroxy component shown below with a fluorine-containing carbonate component shown below in the presence of a condensation catalyst, and then distilling off a by-produced fluorine-containing alcohol,
   the dihydroxy component is at least one selected from the group consisting of an alicyclic dihydroxy compound and a linear or branched aliphatic dihydroxy compound, where a part of carbon atoms in the alicyclic dihydroxy compound may be substituted with an oxygen atom, and a part of carbon atoms in the linear or branched aliphatic dihydroxy compound may be substituted with an oxygen atom,
   the fluorine-containing carbonate component is: a compound represented by Formula (1) shown below.

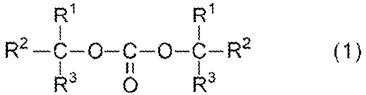

   Provided that R¹ represents a group represented by CA¹B¹R⁴ and two R¹'s may be the same as or different from each other,
   R² represents a group represented by CA²B²R⁵ and two R²'s may be the same as or different from each other,
   R³ represents a hydrogen atom or a group represented by CA³B³R⁶ and two R³'s may be the same as or different from each other,
   A¹ to A³ each independently represent a hydrogen atom, a fluorine atom, or R^{f},
   B¹ to B³ each independently represent a hydrogen atom, a fluorine atom, or R^{f},
   R⁴ to R⁶ each independently represent a fluorine atom, R^{f}, or OR^{f}, and
   R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom.
[26] A fluorine-containing biscarbonate represented by formula shown below. 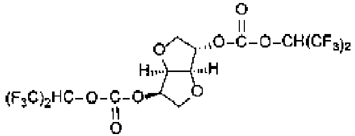
[27] A method for producing the fluorine-containing biscarbonate according to [26], including reacting isosorbide with bis(1,1,1,3,3,3-hexafluoroisopropyl)carbonate in the presence of a condensation catalyst, and then distilling off a by-produced fluorine-containing alcohol.

### [Advantageous Effects of Invention]

According to the method for producing a polycarbonate of the present invention, a polycarbonate having a high molecular weight can be produced from a non-aromatic dihydroxy compound as a raw material at a relatively low temperature.

### [Description of Embodiments]

In the present specification, the compound represented by Formula (1) is referred to as Compound (1). Compounds represented by other formulae are also described in the same manner.

The meanings and the definitions of the terms in the present invention are as follows.

An "ethereal oxygen atom" means an oxygen atom that forms an ether bond.

A "prepolymer" is a solid intermediate product obtained by stopping the condensation reaction between a dihydroxy component and a fluorine-containing carbonate component as raw materials at an appropriate stage, and means a polycarbonate having a weight-average molecular weight lower than that of the high molecular weight polycarbonate obtained by a solid state polymerization method.

The "solid state polymerization method" means a polymerization method of polymerizing prepolymers while maintaining the solid state of the prepolymer to obtain a polycarbonate having a high molecular weight.

A "melting temperature of the prepolymer" means the temperature at which the prepolymer melts to become liquid or to soften. The prepolymer is heated to a predetermined temperature, and the temperature at which the prepolymer becomes liquid or softens is visually confirmed and determined.

A "weight-average molecular weight" and a "number-average molecular weight" are values measured by gel permeation chromatography (GPC) in terms of the standard polystyrene.

A "glass transition temperature" is a temperature measured by the differential scanning calorimetry (DSC) method as a midpoint glass transition temperature according to JIS K 7121:1987.

"Crystallization" means performing of an operation for increasing the crystallinity of a polymer.

A "perfluoroalkylene group" means a group in which all of hydrogen atoms of an alkylene group have been substituted with a fluorine atom.

A "fluoroalkyl group" means a group in which some or all of hydrogen atoms of an alkyl group have been substituted with a fluorine atom.

"To" indicating a numerical range means that the numerical values before and after it are included as lower and upper limits.

The method for producing a polycarbonate according to one aspect of the present invention includes Step a and Step b as follows.

Step a: a step of reacting a specific dihydroxy component with a specific fluorine-containing carbonate component in the presence of a condensation catalyst to obtain a prepolymer.

Step b: a step of subjecting the prepolymer to a solid state polymerization to obtain a polycarbonate.

### (Dihydroxy component)

The dihydroxy component is at least one non-aromatic dihydroxy compound selected from the group consisting of an alicyclic dihydroxy compound (provided that an ethereal oxygen atom may be contained) and a linear or branched aliphatic dihydroxy compound (provided that an ethereal oxygen atom may be contained), or a mixture of this non-aromatic dihydroxy compound and an aromatic dihydroxy compound.

Examples of the alicyclic dihydroxy compound (provided that an ethereal oxygen atom may be contained) include a compound having an alicyclic structure (provided that an ethereal oxygen atom may be contained) and two hydroxyl groups, which are bonded to the cyclic skeleton directly or through a linking group.

Examples of the linking group include an alkylene group (a methylene group, a 1,1-dimethylethylene group, a 2,2-dimethylpropylene group, and the like).

The alicyclic structure may be monocyclic or polycyclic. A ring constituting an alicyclic structure (in a case of being polycyclic, each of a plurality of rings constituting the alicyclic structure) may be, for example, a 4- to 7-membered ring. The number of ethereal oxygen atoms which may be contained in the alicyclic structure is, for example, 1 or 2 per ring constituting the alicyclic structure.

Another substituent may be bonded to the cyclic skeleton of the alicyclic structure. Examples of the other substituent include an alkyl group (a methyl group, an ethyl group, and the like), an alkenyl group (a vinyl group, an allyl group, and the like), and the like.

Specific examples of the alicyclic dihydroxy compound (provided that an ethereal oxygen atom may be contained) include the following compounds.

Cycloalkanedimethanol such as 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol; cycloalkanediols such as 1,2-cyclohexanediol, 1,3-cyclohexanediol, 1,4-cyclohexanediol, tricyclodecanediol, pentacyclodecanediol, 2,6-decalindiol, 1,5-decalindiol, 2,3-decalindiol, 2,3-norbornanediol, 2,5-norbomanediol, and 1,3-adamantanediol; isosorbide, dioxane glycol, spiroglycol, and the like.

Examples of the linear or branched aliphatic dihydroxy compound (provided that an ethereal oxygen atom may be contained) include a compound having an alkylene group (provided that an ethereal oxygen atom may be contained) and two hydroxyl groups which are bonded to the alkylene group.

The alkylene group may be linear or branched. The alkylene group has, for example, 1 to 10 carbon atoms. The number of ethereal oxygen atoms which may be contained in the alkylene group is, for example, in a range of 1 to 3.

Specific examples of the linear or branched aliphatic dihydroxy compound (provided that an ethereal oxygen atom may be contained) include the following compounds.

Alkanediols such as ethylenediol, 1,3-propanediol, 1,4-butanediol, 1,5-pentanediol, 1,6-hexanediol, 1,8-octanediol, and 1,10-decanediol; polyethylene glycols such as diethylene glycol, triethylene glycol, and tetraethylene glycol, and the like.

The non-aromatic dihydroxy compound is preferably isosorbide from the viewpoint of the availability of plant-derived raw materials.

The isosorbide and another non-aromatic dihydroxy compound may be used in combination. From the viewpoints that the glass transition temperature of the prepolymer is relatively high and the solid state polymerization is easily performed, the other non-aromatic dihydroxy compounds are preferably the alicyclic dihydroxy compound (provided that an ethereal oxygen atom may be contained) other than isosorbide, more preferably cycloalkanedimethanol or cycloalkanediol, and even more preferably cycloalkanedimethanol.

The proportion of the isosorbide to the entire non-aromatic dihydroxy compounds is preferably 50% by mole or more and more preferably 80% by mole or more, and may be 100% by mole. In a case where the proportion of the isosorbide is not less than the above-described lower limit, the ratio of the plant-derived component can be further increased.

In a case where isosorbide is used in combination with another non-aromatic dihydroxy compound, the ratio of the isosorbide to the entire non-aromatic dihydroxy compound is preferably 50% by mole or more and more preferably 70% by mole or more, and is preferably 95% by mole or less. In a case where the proportion of the isosorbide is not less than the above-described lower limit, the ratio of the plant-derived component can be further increased, and in a case where the proportion of the isosorbide is not more than the above-described upper limit, the molding processability is more excellent.

In a case where the dihydroxy component is a mixture of a non-aromatic dihydroxy compound and an aromatic dihydroxy compound, the performance (heat resistance, rigidity, toughness, and the like) of the polycarbonate is more excellent as compared with a case where the dihydroxy component consists only of the non-aromatic dihydroxy compound.

The aromatic dihydroxy compound is preferably an aromatic compound having two phenolic hydroxyl groups.

Specific examples of the aromatic dihydroxy compound include the following compounds.

2,2-Bis(4-hydroxyphenyl)propane (hereinafter, also referred to as bisphenol A), 2,2-bis(4-hydroxyphenyl)-1,1,1,3,3,3-hexafluoropropane (hereinafter, also referred to as bisphenol AF), hydroquinone, 4,4'-dihydroxybiphenyl, 9,9-bis(4-hydroxyphenyl)fluorene, bis(4-hydroxyphenyl)ether, bis(4-hydroxyphenyl)thioether, bis(4-hydroxyphenyl)sulfone, bis(4-hydroxyphenyl)ketone, and the like.

From the viewpoint of ease of availability of raw materials and usefulness of a polycarbonate, the aromatic dihydroxy compound is preferably bisphenol A or bisphenol AF, and particularly preferably bisphenol A.

In a case where the dihydroxy component is a mixture of a non-aromatic dihydroxy compound and an aromatic dihydroxy compound, and the non-aromatic dihydroxy compound includes isosorbide, the proportion of the isosorbide to the entire dihydroxy component is preferably 40% to 95% by mole and more preferably 50% to 90% by mole. In a case where the proportion of the isosorbide is not less than the above-described lower limit, the ratio of the plant-derived component can be further increased, and in a case where the proportion of the isosorbide is not more than the above-described upper limit, the molding processability is more excellent.

In a preferred aspect, the dihydroxy component is isosorbide.

In another preferred aspect, the dihydroxy component is a mixture of isosorbide and an aromatic dihydroxy compound. Therein, the aromatic dihydroxy compound is preferably bisphenol A or bisphenol AF, and the aromatic dihydroxy compound is particularly preferably bisphenol A.

In the present aspect, the proportion of the isosorbide to the entire dihydroxy component is preferably 40% to 95% by mole and more preferably 50% to 90% by mole.

In another preferred aspect, the dihydroxy component is a mixture of isosorbide and an alicyclic dihydroxy compound in which ethereal oxygen atom is not contained. Therein, the alicyclic dihydroxy compound is preferably cycloalkanedimethanol and particularly preferably 1,4-cyclohexanedimethanol.

In the present aspect, the proportion of the isosorbide to the entire dihydroxy component is preferably 40% to 95% by mole and more preferably 50% to 90% by mole.

In another preferred aspect, the dihydroxy component is a mixture of isosorbide, an alicyclic dihydroxy compound in which ethereal oxygen atom is not contained, and an aromatic dihydroxy compound. Therein, it is preferable that the aromatic dihydroxy compound is bisphenol A or bisphenol AF and the alicyclic dihydroxy compound is cycloalkanedimethanol, and it is particularly preferable that the aromatic dihydroxy compound is bisphenol A and the alicyclic dihydroxy compound is 1,4-cyclohexanedimethanol.

In the present aspect, the proportion of the isosorbide to the entire dihydroxy component is preferably 40% to 95% by mole and more preferably 50% to 90% by mole. The proportion of the aromatic dihydroxy compound to the entire dihydroxy component is preferably 5% to 60% by mole and more preferably 10% to 50% by mole.

### (Fluorine-containing carbonate component)

The fluorine-containing carbonate component is at least one compound selected from the group consisting of Compound (1), Compound (2), Compound (3), and Compound (4).

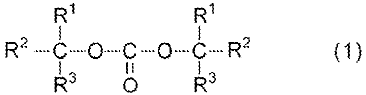

Provided that R¹ represents a group represented by CA¹B¹R⁴, two R¹'s may be the same as or different from each other, R² represents a group represented by CA²B²R⁵, two R²'s may be the same as or different from each other, R³ represents a hydrogen atom or a group represented by CA³B³R⁶, two R³'s may be the same as or different from each other, A¹ to A³ each represent a hydrogen atom, a fluorine atom, or R^{f}, B¹ to B³ each represent a hydrogen atom, a fluorine atom, or R^{f}, and R⁴ to R⁶ represent a fluorine atom, R^{f}, or OR^{f}, where R^{f} represents a fluoroalkyl group having 1 to 12 carbon atoms (provided that an ethereal oxygen atom may be contained) or a fluoroaryl group having 6 to 10 carbon atoms.

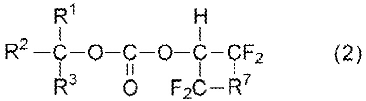

Provided that R¹ represents a group represented by CA¹B¹R⁴, R² represents a group represented by CA²B²R⁵, R³ represents a hydrogen atom or a group represented by CA³B³R⁶, R⁷ represents a perfluoroalkylene group having 1 to 5 carbon atoms (provided that an ethereal oxygen atom may be contained), A¹ to A³ each represent a hydrogen atom, a fluorine atom, or R^{f}, B¹ to B³ each represent a hydrogen atom, a fluorine atom, or R^{f}, and R⁴ to R⁶ represent a fluorine atom, R^{f}, or OR^{f}, where R^{f} represents a fluoroalkyl group having 1 to 12 carbon atoms (provided that an ethereal oxygen atom may be contained) or a fluoroaryl group having 6 to 10 carbon atoms.

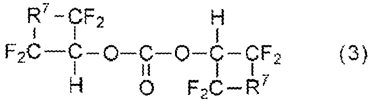

Provided that R⁷ represents a perfluoroalkylene group having 1 to 5 carbon atoms (provided that an ethereal oxygen atom may be contained), and two R⁷'s may be the same as or different from each other.

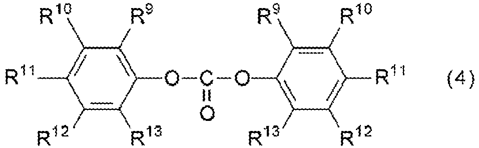

Provided that R⁹ to R¹³ each represent a hydrogen atom, a fluorine atom, or a fluoroalkyl group having 1 to 6 carbon atoms (provided that an ethereal oxygen atom may be contained), and two R⁹'s, two R¹⁰'s, two R¹¹'s, two R¹²'s, and two R¹³'s each may be the same as or different from each other and at least one fluorine atom is included in the molecule.

Specific examples of the fluorine-containing carbonate component include the following ones.

Bis(1,1,1,3,3,3-hexafluoroisopropyl)carbonate, ((CF₃CF₂)(CF₃)CHO)₂CO, ((CF₃CF₂)₂CHO)₂CO, bis(perfluoro(*t*-butyl))carbonate, bis(2,2,3,3,4,4,5,5-octafluorocyclopentyl)carbonate, bis(2,2,3,3,4,4,5,5,6,6-decafluorocyclohexyl)carbonate, bis(perfluorophenyl)carbonate, bis(*m*-trifluoromethylphenyl)carbonate, bis(o-trifluoromethylphenyl)carbonate, and bis(p-trifluoromethylphenyl)carbonate, and the like.

From the viewpoint of the transesterification reaction rate, the fluorine-containing carbonate component is preferably bis(1,1,1,3,3,3-hexafluoroisopropyl)carbonate, bis(perfluoro(*t*-butyl))carbonate, or bis(2,2,3,3,4,4,5,5,6,6-decafluorocyclohexyl)carbonate.

From the viewpoints of availability of raw materials, ease of producing fluorine-containing carbonates, and being capable of producing a polycarbonate having a high molecular weight, the fluorine-containing carbonate component is particularly preferably bis(1,1,1,3,3,3-hexafluoroisopropyl)carbonate.

The fluorine-containing carbonate component is preferably obtained by a reaction using a fluorine-containing alcohol as a starting material.

The fluorine-containing alcohol is preferably at least one selected from the group consisting of Compound (5) and Compound (6).

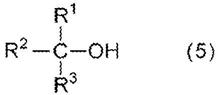

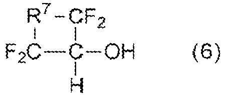

Provided that R¹ represents a group represented by CA¹B¹R⁴, R² represents a group represented by CA²B²R⁵, R³ represents a hydrogen atom or a group represented by CA³B³R⁶, R⁷ represents a perfluoroalkylene group having 1 to 5 carbon atoms (provided that ethereal oxygen may be contained), A¹ to A³ each represent a hydrogen atom, a fluorine atom, or R^{f}, B¹ to B³ each represent a hydrogen atom, a fluorine atom, or R^{f}, and R⁴ to R⁶ represent a fluorine atom, R^{f}, or OR^{f}, where R^{f} represents a fluoroalkyl group having 1 to 12 carbon atoms (provided that ethereal oxygen may be contained) or a fluoroaryl group having 6 to 10 carbon atoms.

From the viewpoint of increasing the transesterification reaction rate, the fluorine-containing alcohol preferably has an acid dissociation degree higher than an acid dissociation degree of the aromatic dihydroxy compound. Therefore, a secondary or tertiary fluorine-containing alcohol in which a fluoroalkyl group is directly bonded to a carbon atom (hereinafter, referred to as α-carbon) at the α-position of a hydroxyl group is preferable. However, an alcohol in which a fluorine atom is directly bonded to the α-carbon is not preferable because a decomposition reaction due to a de-HF reaction easily occurs.

From the viewpoint that the larger the number of fluoroalkyl groups bonded to the α-carbon is, the higher the acid dissociation degree of the fluorine-containing alcohol is, Compound (5) is preferably a tertiary fluorine-containing alcohol in which R³ represents a group represented by CA³B³R⁶. From the viewpoint of stability of the fluorine-containing carbonate component, a fluorine-containing alcohol in which R³ represents a hydrogen atom, that is, a secondary fluorine-containing alcohol is preferable.

As a scale of the acid dissociation degree, the pKa of the fluorine-containing alcohol can be used.

From the viewpoint of increasing the transesterification reaction rate, a pKa of the fluorine-containing alcohol is preferably 12 or less, more preferably 11 or less, and particularly preferably 10 or less. From the viewpoints of availability of raw materials and ease of producing fluorine-containing carbonate components, the pKa of the fluorine-containing alcohol is preferably 5 or more.

The number of carbon atoms in the fluorine-containing alcohol is preferably 2 to 10. In a case where the number of carbon atoms of the fluorine-containing alcohol is 2 or more, a stable fluorine-containing alcohol in which a fluorine atom is not directly bonded to the α-position of a hydroxyl group can be selected. In a case where the number of carbon atoms of the fluorine-containing alcohol is 10 or less, when the fluorine-containing alcohol that is dissociated during the transesterification reaction is distilled off, the boiling point is such that the fluorine-containing alcohol can be easily removed under mild conditions. Therefore, it is not necessary to apply a high temperature during the transesterification reaction, and a high-quality polycarbonate can be produced.

Specific examples of the fluorine-containing alcohol include the following ones.

1,1,1,3,3,3-hexafluoroisopropanol (pKa: 9.4), (CF₃CF₂)(CF₃)CHOH (pKa: 9.5), (CF₃CF₂)₂CHOH (pKa: 10.6), perfluoro(t-butyl)alcohol (pKa: 5.3), 2,2,3,3,4,4,5,5-octafluorocyclopentanol, and 2,2,3,3,4,4,5,5,6,6-decafluorocyclohexanol, and the like.

From the viewpoint of acid dissociation degree, the fluorine-containing alcohol is preferably 1,1,1,3,3,3-hexafluoroisopropanol, perfluoro(t-butyl)alcohol, and 2,2,3,3,4,4,5,5,6,6-decafluorocyclohexanol.

From the viewpoints of ease of availability and ease of producing the fluorine-containing carbonate component, the fluorine-containing alcohol is particularly preferably 1,1,1,3,3,3-hexafluoroisopropanol.

Examples of the method for producing the fluorine-containing carbonate component include a method of reacting a fluorine-containing alcohol with phosgenes, a dialkyl carbonate, Compound (7), or the like.

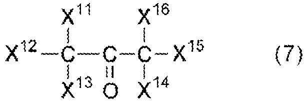

Provided that X¹¹ to X¹³ each represent a hydrogen atom or a halogen atom, at least one of X¹¹ to X¹³ represents a halogen atom, X¹⁴ to X¹⁶ each represents a hydrogen atom or a halogen atom, and at least one of X¹⁴ to X¹⁶ represents a halogen atom. X¹¹ to X¹⁶ are preferably all halogen atoms, more preferably all fluorine atoms or chlorine atoms, and particularly preferably all chlorine atoms from the viewpoint of obtaining chloroform as a by-product.

A specific method for obtaining a fluorine-containing carbonate component using a secondary fluorine-containing alcohol having a high acid dissociation degree as a starting material is preferably a reaction with phosgenes from the viewpoint of yield and more preferably a reaction with triphosgene from the viewpoint of easy handling.

The fluorine-containing alcohol can be reacted with triphosgene in a solvent in the presence of a base catalyst. The solvent is preferably toluene from the viewpoint of easy purification. The base catalyst is preferably at least one selected from the group consisting of a tertiary amine, an alkali metal hydride, an alkaline earth metal hydride, an alkali metal, and an alkaline earth metal. The reaction temperature is preferably -50°C to 60°C.

### (Condensation catalyst)

Examples of the condensation catalyst include a basic transesterification catalyst.

Examples of the basic transesterification catalyst include a nitrogen-containing compound, an alkali metal compound, an alkaline earth metal compound, and the like.

Examples of the nitrogen-containing compound include amines, quaternary ammonium hydroxides, salts of amines, and the like.

Examples of the alkali metal compound or the alkaline earth metal compound include an organic acid salt, an inorganic salt, an oxide, a hydroxide, a hydride, and an alkoxide of the alkali metal or the alkaline earth metal.

The condensation catalyst may be used alone or in a combination of two or more kinds thereof.

The condensation catalyst is preferably amines from the viewpoints of high polymerization activity and excellent applicability to solution polymerization for producing a prepolymer.

Specific examples of the nitrogen-containing compound include tertiary amines (triethylamine, tripropylamine, tributylamine, triisoamylamine, trihexylamine, triheptylamine, trioctylamine, tridodecylamine, and the like), secondary amines (diethylamine, dibutylamine, and the like), primary amines (propylamine, butylamine, and the like), imidazoles (2-methylimidazole, 2-phenylimidazole, benzimidazole, and the like), and quaternary ammonium hydroxides having an alkyl group and/or an aryl group (tetramethylammonium hydroxide, tetraethylammonium hydroxide, tetrapropylammonium hydroxide, tetrabutylammonium hydroxide, trimethylbenzylammonium hydroxide, and the like).

Specific examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium boron hydride, sodium phenylborate, sodium phenylborate, sodium benzoate, potassium benzoate, cesium benzoate, lithium benzoate, disodium hydrogen phosphate, dipotassium hydrogen phosphate, disodium phenylphosphate, sodium gluconate, a disodium salt of bisphenol A, dipotassium salt of bisphenol A, a dicesium salt of bisphenol A, a dilithium salt of bisphenol A, a sodium salt of phenol, a potassium salt of phenol, cesium salt of phenol, and lithium salt of phenol.

Specific examples of the alkaline earth metal compound include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

### (Step a)

The dihydroxy component is reacted with the fluorine-containing carbonate component in the presence of a condensation catalyst to obtain a prepolymer.

Specifically, for example, in the presence of a condensation catalyst, a dihydroxy component is reacted with a fluorine-containing carbonate component in a solvent, and then the solvent and the by-produced fluorine-containing alcohol are distilled off to obtain a solid prepolymer. It is preferable to dry the prepolymer at a temperature lower than the glass transition temperature of the prepolymer.

Examples of the solvent include acetonitrile, N,N-dimethylformamide (DMF), 1,4-dioxane, dichloromethane, chloroform, chlorobenzene, and the like.

The solvent is preferably acetonitrile, DMF, or chlorobenzene from the viewpoint of solubility of the raw material.

The molar ratio (the fluorine-containing carbonate component/the dihydroxy component) of the fluorine-containing carbonate component to the dihydroxy component in Step a is preferably 1/1 to 2/1, more preferably 1/1 to 1.3/1, and particularly preferably 1.02/1 to 1.2/1. In a case where the molar ratio of the fluorine-containing carbonate component to the dihydroxy component is within the above-described range, it is easy to obtain a prepolymer having a constitutional unit derived from a fluorine-containing carbonate component at a terminal. In the prepolymer having a constitutional unit derived from a fluorine-containing carbonate component at a terminal, a solid state polymerization is likely to proceed without crystallizing the prepolymer as described later. In addition, the solid state polymerization proceeds even at a temperature lower than the glass transition temperature of the prepolymer.

The weight-average molecular weight of the prepolymer is preferably 500 to 15,000, more preferably 500 to 10,000, and particularly preferably 1,000 to 10,000. In a case where the weight-average molecular weight of the prepolymer is within the above-described range, the prepolymer is in a powder state, and the solid state polymerization in Step b is likely to proceed.

The glass transition temperature of the prepolymer is preferably 60°C or more, more preferably 70°C or more, and particularly preferably 80°C or more. In addition, the glass transition temperature of the prepolymer is preferably 160°C or less. In a case where the glass transition temperature of the prepolymer is not less than the above-described lower limit and not more than the above-described upper limit, the solid state polymerization in Step b is likely to proceed at a low temperature without melting of the prepolymer.

The molar ratio (the fluorine-containing alkoxy terminal group/hydroxyl group) of the fluorine-containing alkoxy terminal group which is end-capped with the derivative from the fluorine-containing carbonate component of the prepolymer obtained in Step a to the hydroxyl group terminal group derived from the dihydroxy component is preferably 0.8/1 to 1.4/1, more preferably 0.9/1 to 1.3/1, and particularly preferably 0.95/1 to 1.25/1. In a case where the content of the fluorine-containing alkoxy terminal group is not less than the above-described lower limit value, it is possible to suppress an increase in the concentration of the hydroxyl group at the terminal of the polycarbonate obtained by the solid state polymerization in Step b. In a case where the content of the fluorine-containing alkoxy terminal group is not more than the above-described upper limit value, a polycarbonate having a sufficiently high molecular weight is easily obtained.

In the present specification, the above-described molar ratio at the terminal group of the polymer (including a prepolymer and a polycarbonate having a high molecular weight) is preferably analyzed by ¹H-NMR analysis of the polymer. A specific ¹H-NMR analysis method is as described in Examples of PCT International Publication No. WO2014/171367.

The prepolymer obtained in Step a is usually obtained in a state of a solution since a solvent is used during the production. Accordingly, the solvent and the by-produced fluorine-containing alcohol are distilled off to isolate a solid prepolymer. It is preferable to dry the prepolymer in a vacuum at a low temperature to remove the residual solvent and the like.

The prepolymer may be in a state such as, for example, a powder or a paste. The powder state is preferable in the viewpoint that the solid state polymerization in Step b is likely to proceed.

The prepolymer in the powder state can be obtained, for example, by pulverizing the solid prepolymer obtained as described above. Examples of the method of pulverizing include various known methods, for example, a method of mechanically pulverizing and a method of mechanically pulverizing under freezing.

The average particle size of the prepolymer in the powder state is preferably 0.1 µm to 1 mm, more preferably 1 µm to 500 µm, and particularly preferably 3 µm to 200 µm. In a case where the average particle size is within this range, a prepolymer in the powder state can be obtained by a simple operation. In addition, the solid state polymerization in Step b is likely to proceed.

### (Step b)

The prepolymer is heated at a temperature lower than a melting temperature thereof without a step of crystallizing the prepolymer, and the prepolymer is subjected to a solid state polymerization while discharging a by-produced fluorine-containing alcohol outside a system to obtain a polycarbonate.

The heating temperature is less than the melting temperature of the prepolymer, and is preferably 200°C or less and more preferably 195°C or less. In a case where the heating temperature is less than the melting temperature, the reaction proceeds in the solid state. In particular, in a case where the heating temperature is 200°C or less, it is possible to suppress coloring of the carbonate due to heat.

The heating temperature is preferably 40°C or more and more preferably 90°C or more. In a case where the heating temperature is not less than the above-described lower limit value, the reaction easily proceeds and the productivity of a polycarbonate is high.

In Step b, it is preferable that heating is started at a temperature around 40°C to 110°C, the temperature is gradually raised, and finally the temperature is set to 180°C to 200°C. By heating the prepolymer in this manner, the solid state polymerization easily proceeds, and a polycarbonate having a high molecular weight and being suppressed coloring is obtained. In addition, the productivity of a polycarbonate is high.

The heating time is preferably 1 to 48 hours, more preferably 2 to 36 hours, and particularly preferably 3 to 24 hours. In a case where the heating time is within the above range, the productivity of a polycarbonate is high, which is suitable for industrial production.

Examples of a method of discharging the fluorine-containing alcohol produced as a by-product during the solid state polymerization outside a system include a method of performing a solid state polymerization under reduced pressure, a method of performing a solid state polymerization while blowing an inert gas, a method using these in combination, and the like. The method of introducing an inert gas requires the reuse of the inert gas that is discharged outside the system, and becomes a complicated process. Therefore, a method of performing a solid state polymerization under reduced pressure is more preferable.

A pressure when the prepolymer is subjected to the solid state polymerization under reduced pressure is preferably a high vacuum range of 13 kPa (absolute pressure) (100 torr (absolute pressure)) or less, more preferably 1.3 kPa (absolute pressure) (10 torr (absolute pressure)) or less, and particularly preferably 0.67 kPa to 0.013 kPa (absolute pressure) (5 to 0.1 torr (absolute pressure)). In a case where the pressure is within the above range, the solid state polymerization proceeds fast.

The inert gas means a gas that is inert to a solid state polymerization, and examples thereof include nitrogen, argon, helium, carbon dioxide, a lower hydrocarbon, and acetone.

Examples of the solid state polymerization device include known devices. The type of the device may be any type, such as a batch type, a continuous type, or a type using these in combination. Specific examples thereof include a tumbler type, a kiln type, a paddle dryer type, a screw conveyor type, a vibration type, a fluidized bed type, a fixed bed type, and a moving bed type. As the experimental apparatus, a vacuum drier and the like, which are used for drying a polymer, can also be used.

The weight-average molecular weight of the polycarbonate to be finally obtained is preferably 10,000 to 100,000, more preferably 15,000 to 70,000, and particularly preferably 20,000 to 60,000. In a case where the weight-average molecular weight of the polycarbonate is not less than the above lower limit values, heat resistance, rigidity, and toughness are more excellent, and in a case where the weight-average molecular weight of the polycarbonate is not more than the above upper limit values, molding processability is more excellent.

### (Action effect)

In the above-described method for producing a polycarbonate, a specific dihydroxy component is reacted with a specific fluorine-containing carbonate component in the presence of a condensation catalyst, and the obtained prepolymer is subjected to a solid state polymerization. Therefore, a polycarbonate having a high molecular weight can be produced from a non-aromatic dihydroxy compound as a raw material at a relatively low temperature lower than the melting temperature of the prepolymer. In addition, in the present production method, since the polycarbonate can be produced at a relatively low temperature, coloring of the polycarbonate due to heat can be suppressed.

In the present production method, since the specific dihydroxy component is reacted with the specific fluorine-containing carbonate component, a prepolymer having a constitutional unit derived from the fluorine-containing carbonate component at a terminal is obtained. In the prepolymer having a constitutional unit derived from a fluorine-containing carbonate component at a terminal, it is considered that since the constitutional unit derived from a fluorine-containing carbonate component at the terminal has a high affinity with other prepolymers and is likely to be subjected to a transesterification reaction, the transesterification solid state polymerization proceeds even at a relatively low temperature that is less than the melting temperature of the prepolymers (for example, 200°C or less).

On the other hand, in a prepolymer obtained by reacting a specific dihydroxy component with a diaryl carbonate or a dialkyl carbonate other than the specific fluorine-containing carbonate component, it is considered that since the constitutional unit derived from the diaryl carbonate or the dialkyl carbonate at the terminal has a low affinity with another prepolymer and is difficult to be subjected to the transesterification reaction, the solid state polymerization does not proceed unless the temperature is increased (for example, unless the temperature is increased to 240°C or more).

In the method of PCT International Publication No. WO2014/171367, the inventors of the present invention considered that a transesterification reaction proceeds even in a case of solid state polymerization by stacking benzene rings of aromatic dihydroxy compounds. It has been unexpected that the transesterification reaction proceeds by a solid state polymerization even in the absence of the benzene ring.

In Step a described above, by using an alicyclic dihydroxy compound (provided that an ethereal oxygen atom may be contained) or a linear or branched aliphatic dihydroxy compound (provided that an ethereal oxygen atom may be contained) as the dihydroxy component, and appropriately adjusting the reaction conditions (for example, lowering the reaction temperature and shortening the reaction time), a fluorine-containing biscarbonate represented by Formula (m1), (m2), (m3), or (m4) can be produced.

In a case of producing a fluorine-containing biscarbonate, the amount of the fluorine-containing carbonate component used, with respect to the dihydroxy component, may be 2 times moles or more, but is preferably 10 times moles or less, more preferably 7 times moles or less, and particularly preferably 4 times moles or less.

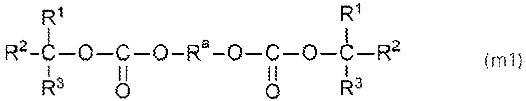

Provided that R¹ represents a group represented by CA¹B¹R⁴ and two R¹'s may be the same as or different from each other,
R² represents a group represented by CA²B²R⁵ and two R²'s may be the same as or different from each other,
R³ represents a hydrogen atom or a group represented by CA³B³R⁶ and two R³'s may be the same as or different from each other,
A¹ to A³ each represent a hydrogen atom, a fluorine atom, or R^{f},
B¹ to B³ each represent a hydrogen atom, a fluorine atom, or R^{f},
R⁴ to R⁶ represent a fluorine atom, R^{f}, or OR^{f},
R^{f} represents a fluoroalkyl group having 1 to 12 carbon atoms (provided that an ethereal oxygen atom may be contained) or a fluoroaryl group having 6 to 10 carbon atoms, and
R^{a} represents a residue in which two hydroxyl groups are excluded from an alicyclic dihydroxy compound (provided that an ethereal oxygen atom may be contained) or a linear or branched aliphatic dihydroxy compound (provided that an ethereal oxygen atom may be contained).

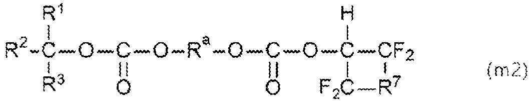

Provided that R¹ represents a group represented by CA¹B¹R⁴,
R² represents a group represented by CA²B²R⁵,
R³ represents a hydrogen atom or a group represented by CA³B³R⁶,
R⁷ represents a perfluoroalkylene group having 1 to 5 carbon atoms (provided that an ethereal oxygen atom may be contained),
A' to A³ each represent a hydrogen atom, a fluorine atom, or R^{f},
B¹ to B³ each represent a hydrogen atom, a fluorine atom, or R^{f},
R⁴ to R⁶ represent a fluorine atom, R^{f}, or OR^{f},
R^{f} represents a fluoroalkyl group having 1 to 12 carbon atoms (provided that an ethereal oxygen atom may be contained) or a fluoroaryl group having 6 to 10 carbon atoms, and
R^{a} represents a residue in which two hydroxyl groups are excluded from an alicyclic dihydroxy compound (provided that an ethereal oxygen atom may be contained) or a linear or branched aliphatic dihydroxy compound (provided that an ethereal oxygen atom may be contained).

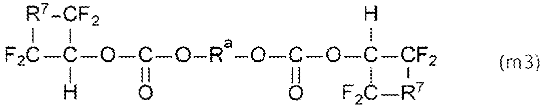

Provided that R⁷ represents a perfluoroalkylene group having 1 to 5 carbon atoms (provided that an ethereal oxygen atom may be contained), where two R⁷'s may be the same as or different from each other, and
R^{a} represents a residue in which two hydroxyl groups are excluded from an alicyclic dihydroxy compound (provided that an ethereal oxygen atom may be contained) or a linear or branched aliphatic dihydroxy compound (provided that an ethereal oxygen atom may be contained).

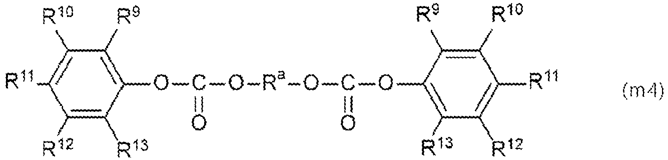

Provided that R⁹ to R¹³ each represent a hydrogen atom, a fluorine atom, or a fluoroalkyl group having 1 to 6 carbon atoms (provided that an ethereal oxygen atom maybe contained), and two R⁹'s, two R¹⁰'s, two R¹¹'s, two R¹²'s, and two R¹³'s each may be the same as or different from each other and at least one fluorine atom is included in the molecule, and

R^{a} represents a residue in which two hydroxyl groups are excluded from an alicyclic dihydroxy compound (provided that an ethereal oxygen atom may be contained) or a linear or branched aliphatic dihydroxy compound (provided that an ethereal oxygen atom may be contained).

By using the fluorine-containing biscarbonate, a polycarbonate having a high molecular weight can be produced from a non-aromatic dihydroxy compound as a raw material in the same manner as in the above-mentioned production method.

For example, the above-described fluorine-containing biscarbonate is reacted alone or together with an optional dihydroxy compounds in the presence of a condensation catalyst to obtain a prepolymer in the same manner in Step a. The obtained prepolymer is heated at a temperature lower than a melting temperature thereof and the prepolymer is subjected to a solid state polymerization while discharging a by-produced fluorine-containing alcohol outside a system to obtain a polycarbonate in the same manner in Step b.

Examples of the optional dihydroxy compound include the alicyclic dihydroxy compound, the linear or branched aliphatic dihydroxy compound, and the aromatic dihydroxy compound, which are described above.

### Examples

Hereinafter, the present invention will be described in detail with reference to Examples, but the present invention is not limited thereto.

Examples 1 to 5 are Examples.

### (¹H-nuclear magnetic resonance spectrum)

Measurement was carried out with a deuterated chloroform solution using AVANCE III 400 (400 MHz for ¹H) manufactured by Bruker. Chemical shifts of various hydrogen nuclei were calculated using tetramethylsilane as an internal standard (0 ppm).

### (Weight-average molecular weight and number-average molecular weight)

Using a liquid chromatography system (a feeding pump PU-4185, a column oven CO-4060, an ultraviolet absorption detector UV-4075, and a refractive index detector RI-4035) manufactured by JASCO Corporation, two Shodex GPC HK-404L columns manufactured by Showa Denko K.K. were connected in series, and GPC measurement was carried out at 40°C using chloroform as a developing solvent (0.3mL/min of flow rate). A calibration curve of an elution time to a molecular weight was created using standard polystyrenes each having a known molecular weight, and based on the calibration curve, the weight-average molecular weight and the number-average molecular weight were calculated in terms of polystyrene from the elution curve of the sample.

### (Example 1)

203.7 mg (1.394 mmol) of isosorbide was weighed into a heat-resistant glass test tube (with a common joint 15/35) having an outer diameter of 21 mm and a total length of 130 mm, a polytetrafluoroethylene stirrer tip was put thereinto, a glass three-way cock was then attached, and the isosorbide was dried for half a day through a diphosphorus pentoxide trap under vacuum. Next, the inside of the test tube was replaced with nitrogen, and 0.8 mL of dry acetonitrile, 532 mg (1.469 mmol) of bis(1,1,1,3,3,3-hexafluoroisopropyl)carbonate, and 13.2 mg (0.0712 mmol) of tri(n-butyl)amine were added thereto in a nitrogen stream to make a homogenous solution. When the homogenous solution was heated at 90°C for 70 hours while stirring with a magnetic stirrer, the product was a white solid and adhered to the bottom of the test tube. Acetonitrile was distilled off under reduced pressure, and 3 mL of dry methylene chloride was added thereto to make a homogenous solution. As a result of a part of the homogenous solution being taken and analyzed by ¹H-nuclear magnetic resonance spectrum and GPC, it was found that a prepolymer having a weight-average molecular weight of 8,832 and a number-average molecular weight of 4,203 was formed. As a result of vacuum drying the homogenous solution remaining in the test tube, a white substance like cotton candy was obtained. Next, the inside of the test tube was replaced with nitrogen, and then the test tube was heated using a column tube oven (GTO-3000 manufactured by Shibata Scientific Co., Ltd.) with gradually raising the temperature (at 50°C, 70°C, 90°C, 110°C, and 130°C for 1 hour each, and at 150°C, 170°C, and 190°C for 3 hours each) under vacuum (0.22 kPa) while the test tube was slowly rotated. The reactant in the test tube was in a solid state from beginning to end. The final product had a weight-average molecular weight of 42395 and a number-average molecular weight of 22417, and in the ¹H-nuclear magnetic resonance spectrum, signals supporting the structure derived from the corresponding polycarbonate (5.13 to 5.06 ppm (2H), 4.91 to 4.86 ppm (1H), 4.56 to 4.51 ppm (1H), 4.09 to 3.97 ppm (2H), and 3.93 to 3.88 ppm (2H)) (all multiplets) were given.

### (Example 2)

200 mg (1.369 mmol) of isosorbide and 50 mg (0.348 mmol) of 1,4-cyclohexanedimethanol was weighed into a heat-resistant glass test tube (with a common joint 15/35) having an outer diameter of 21 mm and a total length of 130 mm, a polytetrafluoroethylene stirrer tip was put thereinto, a glass three-way cock was then attached, and the isosorbide and the 1,4-cyclohexanedimethanol were dried for half a day through a diphosphorus pentoxide trap under vacuum. Next, the inside of the test tube was replaced with nitrogen, and 1.0 mL of dry acetonitrile, 656 mg (1.812 mmol) of bis(1,1,1,3,3,3-hexafluoroisopropyl)carbonate, and 12.5 mg (0.0674 mmol) of tri(n-butyl)amine were added thereto in a nitrogen stream to make a homogenous solution. When the homogenous solution was heated at 90°C for 93 hours while stirring with a magnetic stirrer, the product became clouded. Acetonitrile was distilled off under reduced pressure, and 3 mL of dry methylene chloride was added thereto to make a homogenous solution. As a result of a part of the homogenous solution being taken and analyzed by ¹H-nuclear magnetic resonance spectrum and GPC, it was found that a prepolymer having a weight-average molecular weight of 5,945 and a number-average molecular weight of 3,202 was formed. As a result of vacuum drying the uniform solution remaining in the test tube, a white powdery substance was obtained. Next, the inside of the test tube was replaced with nitrogen, and then the test tube was heated using a column tube oven (GTO-3000 manufactured by Shibata Scientific Co., Ltd.) with gradually raising the temperature (at 110°C, 120°C, 130°C, 140°C, 150°C, 160°C, and 170°C for 1 hour each) under vacuum (0.22 kPa) while the test tube was slowly rotated. The reactant in the test tube was in a solid state from beginning to end. The final product had a weight-average molecular weight of 20,746 and a number-average molecular weight of 10,699, and in the ¹H-nuclear magnetic resonance spectrum, signals supporting a structure derived from copolymerized polycarbonate were given.

### (Example 3)

199.9 mg (1.368 mmol) of isosorbide and 78.2 mg (0.343 mmol) of bisphenol A were weighed into a heat-resistant glass test tube (with a common joint 15/35) having an outer diameter of 21 mm and a total length of 130 mm, a polytetrafluoroethylene stirrer tip was put thereinto, a glass three-way cock was then attached, and the isosorbide and the bisphenol A were dried for half a day through a diphosphorus pentoxide trap under vacuum. Next, the inside of the test tube was replaced with nitrogen, and 1.0 mL of dry acetonitrile, 650.0 mg (1.795 mmol) of bis(1,1,1,3,3,3-hexafluoroisopropyl)carbonate, and 12.9 mg (0.0696 mmol) of tri(n-butyl)amine were added thereto in a nitrogen stream to make a homogenous solution. When the homogenous solution was heated at 90°C for 70 hours while stirring with a magnetic stirrer, the precipitation was generated. Acetonitrile was distilled off under reduced pressure, and 3 mL of dry methylene chloride was added thereto to make a homogenous solution. As a result of a part of the homogenous solution being taken and analyzed by ¹H-nuclear magnetic resonance spectrum and GPC, it was found that a prepolymer having a weight-average molecular weight of 5,867 and a number-average molecular weight of 2,719 was formed. As a result of vacuum drying the homogenous solution remaining in the test tube, a powdery substance was obtained. Next, the inside of the test tube was replaced with nitrogen, and then the test tube was heated using a column tube oven (GTO-3000 manufactured by Shibata Scientific Co., Ltd.) with gradually raising the temperature (at 110°C, 130°C, and 150°C for 1 hour each) under vacuum (0.22 kPa) while the test tube was slowly rotated. As a result of a part of the product being taken and analyzed by ¹H-nuclear magnetic resonance spectrum and GPC, it was found that the reaction proceeded and a polymer having a weight-average molecular weight of 14,882 and a number-average molecular weight of 7,420 was formed. The product was pulverized, the inside of the test tube was replaced again with nitrogen, and the test tube was then heated (at 170°C and 190°C for 1 hour each) under vacuum. The reactant in the test tube was in a solid state from beginning to end. The final product had a weight-average molecular weight of 32,861 and a number-average molecular weight of 16,066, and in the ¹H-nuclear magnetic resonance spectrum, signals supporting a structure derived from copolymerized polycarbonate were given.

### (Example 4)

137 mg (0.937 mmol) of isosorbide, 137mg (0.600 mmol) of bisphenol A, and 22 mg (0.153 mmol) of 1,4-cyclohexanedimethanol were weighed into a heat-resistant glass test tube (with a common slide 15/35) having an outer diameter of 21 mm and a total length of 130 mm, a polytetrafluoroethylene stirrer tip was put thereinto, a glass three-way cock was then attached, and the isosorbide, the bisphenol A, and the 1,4-cyclohexanedimethanol were dried for half a day through a diphosphorus pentoxide trap under vacuum. Next, the inside of the test tube was replaced with nitrogen, and 1.0 mL of dry acetonitrile, 641 mg (1.770 mmol) of bis(1,1,1,3,3,3-hexafluoroisopropyl)carbonate, and 12.7 mg (0.0685 mmol) of tri(n-butyl)amine were added thereto in a nitrogen stream to make a uniform solution. The homogenous solution was heated at 90°C for 70 hours while stirring with a magnetic stirrer. Acetonitrile was distilled off under reduced pressure, and 3 mL of dry methylene chloride was added thereto to make a homogenous solution. As a result of a part of the homogenous solution being taken and analyzed by ¹H-nuclear magnetic resonance spectrum and GPC, it was found that a prepolymer having a weight-average molecular weight of 2,129 and a number-average molecular weight of 1,362 was formed. As a result of vacuum drying the homogenous solution remaining in the test tube, a white powdery substance was obtained. Next, the inside of the test tube was replaced with nitrogen, and then the test tube was heated using a column tube oven (GTO-3000 manufactured by Shibata Scientific Co., Ltd.) with gradually raising the temperature (at 110°C, 120°C, 130°C, 140°C, and 150°C for 1 hour each) under vacuum (0.22 kPa) while the test tube was slowly rotated. As a result of a part of the homogenous solution being taken and analyzed by ¹H-nuclear magnetic resonance spectrum and GPC, it was found that the reaction proceeded and a polymer having a weight-average molecular weight of 34,970 and a number-average molecular weight of 16,553 was formed. The inside of the test tube was replaced again with nitrogen and the test tube was then heated (at 170°C and 190°C for 1 hour each) under vacuum. The reactant in the test tube was in a solid state from beginning to end. The final product had a weight-average molecular weight of 52,250 and a number-average molecular weight of 25,361, and in the ¹H-nuclear magnetic resonance spectrum, signals supporting a structure derived from copolymerized polycarbonate were given.

### (Example 5)

100.9 mg (0.690 mmol) of isosorbide was weighed into a heat-resistant glass test tube (with a common joint 15/35), a polytetrafluoroethylene stirrer tip was put thereinto, a glass three-way cock was then attached, and the inside of the test tube was replaced with nitrogen. 2.0 mL of dry acetonitrile, 783.8 mg (2.16 mmol) of bis(1,1,1,3,3,3-hexafluoroisopropyl)carbonate, and 2.6 mg (0.0257 mmol) of triethylamine were added thereto in a nitrogen stream to make a homogenous solution. The homogenous solution was stirred at room temperature for 44 hours with a magnetic stirrer. As a result of a part of the reaction solution being taken and analyzed by ¹H-nuclear magnetic resonance spectrum, and it was found that the desired isosorbide biscarbonate was produced quantitatively. Acetonitrile is distilled off under reduced pressure and 1 mL of dry methylene chloride was added thereto to make a homogenous solution. 35.4 mg (corresponding to 0.28 mmol of H⁺) of a strongly acidic ion exchange resin ("Amberlyst 15" manufactured by Organo Corporation) was added thereto and the mixture was filtered. The filtrate was dried under reduced pressure and distilled under vacuum (12 to 13 Pa) using a column tube oven (GTO-3000 manufactured by Shibata Scientific Co., Ltd.), and the distillate at 250°C was collected to obtain the desired isosorbide biscarbonate. The identification data are shown below.

¹H-nuclear magnetic resonance spectrum (400 MHz, CDCl₃): δ ppm = 3.88 (dd, *J* = 11.1, 4.8 Hz, 1H), 4.01 (dd, *J* = 11.5, 3.2 Hz, 1H), 4.06 to 4.18 (m, 2H), 4.56 (d, *J* = 5.1 Hz, 1H), 5.01 (t, J = 5.5 Hz, 1H), 5.16-5.27 (m, 2H). ¹³C-nuclear magnetic resonance spectrum (100 MHz, CDCl₃) ppm: 69.44 to 71.51 (m), 71.00, 72.69, 78.88, 81.28, 83.00, 85.56, 115.8 to 124.3 (m), 152.07, 152.34. ¹⁹F-nuclear magnetic resonance spectrum (376 MHz, CDCl₃) ppm: -73.4 to -73.6 (m).

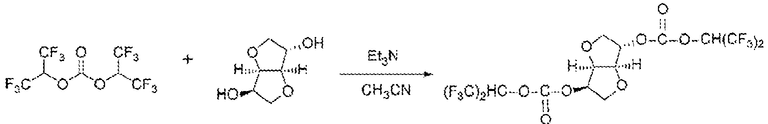

### [Industrial Applicability]

The polycarbonate obtained by the production method according to the present invention is useful as an optical member (a lens, an optical fiber, a film, a backlight diffusion plate for an LCD, a photosensitive body, and the like), a DVD/CD disk, an electronic component housing (such as a mobile phone), a window of transportation equipment, a transparent roofing material, a windshield, a screen, a bulletproof window, tableware, a suitcase, a helmet, and the like.

## Claims

1. A method for producing a polycarbonate, comprising:
reacting a dihydroxy component shown below with a fluorine-containing carbonate component shown below in a presence of a condensation catalyst to obtain a prepolymer; and
heating the prepolymer at a temperature lower than a melting temperature of the prepolymer and subjecting the prepolymer to a solid state polymerization while discharging a by-produced fluorine-containing alcohol outside a system,
wherein the dihydroxy component is at least one non-aromatic dihydroxy compound selected from the group consisting of an alicyclic dihydroxy compound and a linear or branched aliphatic dihydroxy compound, or a mixture of the non-aromatic dihydroxy compound and an aromatic dihydroxy compound, where a part of carbon atoms in the alicyclic dihydroxy compound may be substituted with an oxygen atom, and a part of carbon atoms in the linear or branched aliphatic dihydroxy compound may be substituted with an oxygen atom,
the fluorine-containing carbonate component is at least one compound selected from the group consisting of a compound represented by Formula (1) shown below, a compound represented by Formula (2) shown below, a compound represented by Formula (3) shown below, and a compound represented by Formula (4) shown below, 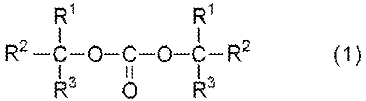
provided that R¹ represents a group represented by CA¹B¹R⁴ and two R¹'s may be the same as or different from each other,
R² represents a group represented by CA²B²R⁵ and two R²'s may be the same as or different from each other,
R³ represents a hydrogen atom or a group represented by CA³B³R⁶ and two R³'s may be the same as or different from each other,
A¹ to A³ each independently represent a hydrogen atom, a fluorine atom, or R^{f},
B¹ to B³ each independently represent a hydrogen atom, a fluorine atom, or R^{f},
R⁴ to R⁶ each independently represent a fluorine atom, R¹, or OR^{f}, and
R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom, 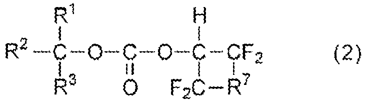
provided that R¹ represents a group represented by CA¹B¹R⁴,
R² represents a group represented by CA²B²R⁵,
R³ represents a hydrogen atom or a group represented by CA³B³R⁶,
R⁷ represents a perfluoroalkylene group having 1 to 5 carbon atoms, where a part of carbon atoms in the perfluoroalkylene group having 1 to 5 carbon atoms may be substituted with an oxygen atom,
A¹ to A³ each independently represent a hydrogen atom, a fluorine atom, or R^{f},
B¹ to B³ each independently represent a hydrogen atom, a fluorine atom, or R^{f},
R⁴ to R⁶ each independently represent a fluorine atom, R¹, or OR^{f}, and
R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom, 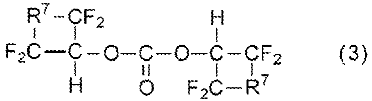
provided that R⁷ represents a perfluoroalkylene group having 1 to 5 carbon atoms, and two R⁷'s may be the same as or different from each other, where a part of carbon atoms in the perfluoroalkylene group having 1 to 5 carbon atoms may be substituted with an oxygen atom, 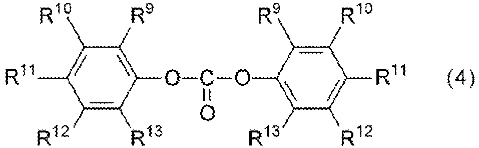
provided that R⁹ to R¹³ each independently represent a hydrogen atom, a fluorine atom, or a fluoroalkyl group having 1 to 6 carbon atoms, two R⁹'s, two R¹⁰'s, two R¹¹'s, two R¹²'s, and two R¹³'s may be the same as or different from each other, and at least one fluorine atom is contained in a molecule thereof, where a part of carbon atoms in the fluoroalkyl group having 1 to 6 carbon atoms may be substituted with an oxygen atom.

2. The production method according to Claim 1,
wherein the non-aromatic dihydroxy compound includes isosorbide.

3. The production method according to Claim 2,
wherein a proportion of the isosorbide to an entire non-aromatic dihydroxy compound is 50% by mole or more.

4. The production method according to any one of Claims 1 to 3,
wherein the dihydroxy component is a mixture of the non-aromatic dihydroxy compound and the aromatic dihydroxy compound.

5. The production method according to any one of Claims 1 to 4,
wherein a weight-average molecular weight of the prepolymer is 500 to 15,000.

6. The production method according to any one of Claims 1 to 5,
wherein a heating temperature when the prepolymer is subjected to the solid state polymerization is 200°C or less.

7. The production method according to any one of Claims 1 to 6,
wherein a weight-average molecular weight of the polycarbonate is 10,000 to 100,000.

8. A fluorine-containing biscarbonate represented by Formula (ml) shown below, 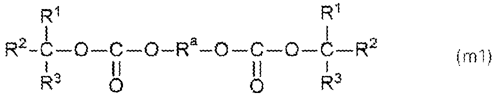
provided that R¹ represents a group represented by CA¹B¹R⁴ and two R¹'s may be the same as or different from each other,
R² represents a group represented by CA²B²R⁵ and two R²'s may be the same as or different from each other,
R³ represents a hydrogen atom or a group represented by CA³B³R⁶ and two R³'s may be the same as or different from each other,
A¹ to A³ each independently represent a hydrogen atom, a fluorine atom, or R^{f},
B¹ to B³ each independently represent a hydrogen atom, a fluorine atom, or R^{f},
R⁴ to R⁶ each independently represent a fluorine atom, R^{f}, or OR^{f},
R^{f} represents a fluoroalkyl group having 1 to 12 carbon atoms or a fluoroaryl group having 6 to 10 carbon atoms, where a part of carbon atoms in the fluoroalkyl group having 1 to 12 carbon atoms may be substituted with an oxygen atom, and
R^{a} represents a residue where two hydroxyl groups are excluded from an alicyclic dihydroxy compound or a linear or branched aliphatic dihydroxy compound, where a part of carbon atoms in the alicyclic dihydroxy compound may be substituted with an oxygen atom, and a part of carbon atoms in the linear or branched aliphatic dihydroxy compound may be substituted with an oxygen atom.

9. A fluorine-containing biscarbonate represented by formula shown below,
